# EUROPÄISCHE PATENTSCHRIFT

(11) **EP 3 181 949 B1**
(45) Veröffentlichungstag und Bekanntmachung des Hinweises auf die Patenterteilung: **25.03.2020**
(21) Anmeldenummer: 16201882.4
(22) Anmeldetag: 02.12.2016
(51) Int. Cl.: F16H 47/02

(54) **GETRIEBEANORDNUNG, FAHRANTRIEB MIT DER GETRIEBEANORDNUNG UND VERFAHREN ZUR STEUERUNG DER GETRIEBEANORDNUNG**
GEAR ASSEMBLY, DRIVE WITH THE DRIVE ASSEMBLY AND METHOD FOR CONTROLLING THE GEAR ASSEMBLY
SYSTÈME D'ENGRENAGE, MÉCANISME DE TRANSLATION LE COMPRENANT ET PROCÉDÉ DE COMMANDE DU SYSTÈME D'ENGRENAGE

(30) Priorität: 15.12.2015 DE 102015225234
(43) Veröffentlichungstag der Anmeldung: 21.06.2017
(73) Patentinhaber: ROBERT BOSCH GMBH, 70442 Stuttgart (DE)
(72) Erfinder: Lenzgeiger, Ulrich, 86424 Dinkelscherben (DE); Ilk, Erich, 86169 Augsburg (DE); Wiest, Florian, 88299 Leutkirch (DE); Maslowski, Andreas, 88483 Burgrieden (DE); Brix, Norman, 89340 Leipheim (DE)
(74) Vertreter: Thürer, Andreas

(56) Entgegenhaltungen:
- EP-A2- 0 240 178
- WO-A1-2012/150576
- DE-A1- 2 259 903
- DE-C1- 19 753 729
- GB-A- 1 305 572
- US-B1- 6 202 016
- Anonymous: "BOOK 2, CHAPTER 14: Proportional control valves", , 22 November 2018 (2018-11-22), XP55526452, Retrieved from the Internet: URL:https://www.hydraulicspneumatics.com/o ther-technologies/book-2-chapter-14-propor tional-control-valves [retrieved on 2018-11-23]

## Beschreibung

Die Erfindung betrifft eine Getriebeanordnung gemäß dem Oberbegriff des Patentanspruchs 1, einen Fahrantrieb damit gemäß dem Patentanspruch 7 sowie ein Verfahren zur Steuerung der Getriebeanordnung gemäß dem Patentanspruch 8.

Eine derartige Getriebeanordnung sowie ein derartiger Fahrantrieb sind in der gattungsgemäße Druckschrift WO 2012/150576 A1 offenbart.

Die Druckschrift DE 10 2005 058 937 A1 zeigt einen Fahrantrieb mit einem hydrostatischen Getriebe und einem damit in Reihe gekoppelten Schaltgetriebe. Solche gattungsgemäßen Getriebeanordnungen werden beispielsweise in Fahrantrieben für mobile Bau-, Land- und Forstmaschinen oder in ähnlichen Fahrzeugen eingesetzt. Das hydrostatische Getriebe weist dabei eine von einer Antriebsmaschine antreibbare, erste Hydromaschine auf, die in einem insbesondere geschlossenen hydraulischen Kreislauf mit einer zweiten Hydromaschine fluidisch verbunden ist. Das Schaltgetriebe ist dem hydrostatischen Getriebe meist nachgeschaltet, so dass die zweite Hydromaschine, im Zugbetrieb der Hydromotor, mit einer Getriebeeingangswelle des Schaltgetriebes gekoppelt ist. Das Schaltgetriebe verfügt über zumindest zwei Getriebestufen, zu deren Wechsel (Schalten) mittels einer Synchronisiereinrichtung die Drehzahl der mit dem Hydromotor des hydrostatischen Getriebes gekoppelten Getriebeeingangswelle an die jeweilige Fahrsituation und damit an die Drehzahl der Getriebeausgangswelle des Schaltgetriebes angepasst wird.

In der Druckschrift weist die Getriebeausgangswelle für jede Gangstufe jeweils ein fest mit der Getriebeausgangswelle verbundenes Zahnrad auf. Die Getriebeeingangswelle weist für jede Gangstufe ein axial unverschiebliches, drehbar auf der Getriebeeingangswelle gelagertes Losrad auf. Die jeweiligen Zahnräder der beiden Wellen stehen für jede Gangstufe betrachtet miteinander in permanentem Eingriff. Das Schalten zwischen den Getriebestufen erfolgt dann über eine Synchronisiereinrichtung, die grundlegend in formschlüssigem Eingriff mit der Getriebeeingangswelle ist und beim Schalten der entsprechenden Getriebestufe in ebenso formschlüssigem Eingriff mit dem jeweiligen Losrad gebracht wird. Die Betätigung erfolgt über einen doppelt wirkenden Differentialzylinder. Beim Wechsel der Getriebestufen wird mittels der Synchronisiereinrichtung die Drehzahl der mit dem Hydromotor gekoppelten Getriebeeingangswelle an die jeweilige Fahrsituation und damit an die Drehzahl der Getriebeausgangswelle angepasst. Dies erfolgt durch das Lösen der formschlüssigen Verbindung der Synchronisiereinrichtung mit Losrad des auszulegenden Ganges, dem axialen Verrücken der Synchronisiereinrichtung in Richtung des Losrades des neu einzulegenden Ganges und dem Beaufschlagen der Synchronisiereinrichtung mit einer Axialkraft derart, dass deren Reibfläche oder Reibelement mit einer Reibfläche oder einem Reibelement des Losrades des einzulegenden Ganges beaufschlagt wird. Über die übertragenen Reibkräfte wird dabei die Drehzahl der Getriebeeingangswelle an die Drehzahl der Fahrsituation (Getriebeausgangswelle) angepasst (synchronisiert) und bei erfolgter Synchronisation erfolgt schlussendlich das Einrücken der formschlüssigen Verbindung der Synchronisiereinrichtung mit dem Losrad des einzulegenden Ganges, wodurch das Schalten abgeschlossen ist.

Nachteilig an dieser und anderen bekannten Lösungen ist, dass die Synchronisierung der Drehzahl der Wellen des Schaltgetriebes mittels zwischen der Synchronisiereinrichtung und dem jeweiligen Losrad angeordneten Reibelementen und einer Reibkraft erfolgt. Diese sind naturgemäß einem Verschleiß ausgesetzt.

Dem gegenüber liegt der Erfindung die Aufgabe zugrunde, eine Getriebeanordnung zu schaffen, mit der ein verschleißärmeres Schalten ermöglicht ist. Des Weiteren liegt der Erfindung die Aufgabe zugrunde einen Fahrantrieb mit einer derartigen Getriebeanordnung und ein Verfahren zur Steuerung der Getriebeanordnung zu schaffen.

Die erste Aufgabe wird gelöst durch eine Getriebeanordnung mit den Merkmalen des Patenanspruchs 1, die zweite Aufgabe durch einen Fahrantrieb mit den Merkmalen des Patentanspruchs 7 und die dritte durch ein Verfahren mit den Merkmalen des Patentanspruchs 8.

Vorteilhafte Weiterbildungen sind in den abhängigen Patentansprüchen beschrieben.

Eine Getriebeanordnung, insbesondere eine für einen Fahrantrieb, beispielsweise den einer mobilen Arbeitsmaschine, hat ein hydrostatisches Getriebe mit zwei in einem hydraulischen Kreis angeordneten Hydromaschinen. Damit in Reihe gekoppelt ist ein Schaltgetriebe mit wenigstens zwei wechselbaren Getriebestufen oder Gängen. Über die Getriebestufen ist eine Eingangswelle des Schaltgetriebes mit dessen Ausgangswelle in insbesondere unterschiedlich übersetzte Drehverbindung bringbar. Dabei ist zum Wechsel der Getriebestufen eine hydraulisch betätigbare Kuppeleinrichtung, insbesondere Schaltmuffe vorgesehen. Erfindungsgemäß ist die Getriebeanordnung derart ausgestaltet, dass die Koppeleinrichtung in einer Neutralposition - in der die übersetzte Drehverbindung gelöst ist - festlegbar, insbesondere festgelegt ist.

Um die Festlegung in der Neutralposition zusätzlich zu unterstützen, weist die Getriebeanordnung ein Rastmittel zur mechanischen Festlegung auf. Hierbei kann beispielsweise eine federvorgespannte Kugel vorgesehen sein, die in einer der Neutralposition entsprechenden Rastnut einrasten kann.

Diese sicher festlegbare Neutralposition ist Voraussetzung dafür, im Folgenden eine Drehzahlsynchronisierung der Eingangswelle mit der Ausgangswelle allein über die Verstellung einer oder beider Hydromaschinen zu ermöglichen. In diesem Fall kann zum Angleichen der Drehzahl der Eingangs- und Ausgangswelle auf zwischen der Koppeleinrichtung und beispielsweise Zahnrädern der Getriebestufen notwendige Reibelemente verzichtet werden. Damit ist die Möglichkeit gegeben, den Verschleiß des Schaltgetriebes zu verringern, wodurch Kosten für die Vorrichtung, den Betrieb und die Instandhaltung der Getriebeanordnung verringert sind.

Vorzugsweise ist die Getriebeanordnung zu diesem Zweck so ausgestaltet, dass eine erste Hydromaschine mit einer Antriebsmaschine koppelbar ist und ein verstellbares, erstes Verdrängungsvolumen aufweist. Die zweite Hydromaschine ist mit der ersten Hydromaschine vorzugsweise über Arbeitsleitungen in einem insbesondere geschlossenen hydraulischen Kreis fluidisch verbindbar insbesondere verbunden und weist vorzugsweise ein verstellbares, zweites Verdrängungsvolumen auf. Die zweite Hydromaschine ist vorzugsweise mit der Eingangswelle des Schaltgetriebes gekoppelt, so dass ein Drehmoment zwischen dem hydrostatischen Getriebe und dem Schaltgetriebe übertragbar ist. Die Getriebeanordnung hat vorzugsweise eine Steuereinrichtung, über die das Drehmoment während des Wechsels der Getriebestufen auf null oder etwa null reduzierbar ist.

In einer Variante ist die Steuereinrichtung derart ausgestaltet, dass über sie während des Wechsels ein Differenzdruck der zweiten Hydromaschine auf etwa null oder auf null regelbar ist. In dieser Variante ist über die Steuereinrichtung zur Reduzierung des Drehmoments auf etwa null oder auf null vorzugsweise eine Stellgröße der ersten Hydromaschine insbesondere das erste Verdrängungsvolumen veränderbar. Die Drehmomentreduzierung ist dann nicht davon abhängig, dass die Verstellbarkeit des zweiten Verdrängungsvolumens hin zu einem Nullvolumen ermöglicht ist. Auf diese Weise kann die zweite Hydromaschine so ausgestaltet sein, dass Grenzwerte eines Verstellbereichs eines zweiten Verdrängungsvolumens entweder diesseits oder jenseits eines Nullwertes des zweiten Verdrängungsvolumens liegen. So sind Hydromaschinen mit größerem, maximalem Wert des zweiten Verdrängungsvolumens einsetzbar, was den Wirkungsgrad der Getriebeanordnung erhöht.

In einer dazu alternativen oder ergänzenden Variante ist die Steuereinrichtung derart ausgestaltet, dass über sie während des Wechsels die Reduzierung des Drehmoments erzielt wird, indem das zweite Verdrängungsvolumen auf null oder etwa null verstellt wird.

In einer Weiterbildung ist die Koppeleinrichtung in der Neutralposition hydraulisch festlegbar, insbesondere hydraulisch einspannbar. Dadurch kann beispielsweise auf mechanische oder andere Festlegelemente verzichtet werden.

In einer Weiterbildung hat die Getriebeanordnung einen Hydrozylinder zur hydraulischen Betätigung einer Koppeleinrichtung, in dem vorzugsweise ein Kolben angeordnet ist, über den zwei einander entgegenwirkende Zylinderräume abschnittsweise begrenzt sind. Über den so doppelt wirkend ausgebildeten Hydrozylinder kann die Koppeleinrichtung dann wahlweise in Richtung beider Getriebestufen betätigt werden.

In einer bevorzugten Weiterbildung ist wenigstens einer der Zylinderräume über ein Regelventil, insbesondere ein Druckregel-, Druckreduzier- oder Stromregelventil, der Getriebeanordnung mit einer Druckmittelquelle und einer Druckmittelsenke fluidisch verbindbar. Vorzugsweise sind dies beide Zylinderräume über je ein Regelventil. So kann der eine oder können die beiden Zylinderräume gezielt mit Druckmittel beaufschlagt werden, Druckmittel kann gezielt entlassen werden und Kräfte am Kolben können gezielt geregelt werden.

Das oder die Ventile sind vorzugsweise über die Steuereinrichtung steuerbar, insbesondere gesteuert.

In einer Weiterbildung ist in einem Druckmittelströmungspfad, der sich zwischen dem Ventil und dem diesen zugeordneten Zylinderraum erstreckt, eine Düse oder eine Drossel angeordnet. Über diese ist ein Druckmittelzulauf zum Zylinderraum und, im umgekehrten Fall, ein Druckmittelabströmen vom Zylinderraum gedämpft. Auf diese Weise kann die Gefahr eines Überschießens der Koppeleinrichtung über die Neutralposition hinaus reduziert werden.

In einer bevorzugten Weiterbildung ist die Koppeleinrichtung mit einer der beiden Wellen drehfest verbunden und, insbesondere mittels der hydraulischen Betätigung, an dieser Welle axial verschieblich angeordnet. Zudem sind an dieser Welle Losräder der beiden Getriebestufen drehbar und axial bestimmt angeordnet. Zum Einlegen oder Schalten der jeweiligen Getriebestufe dient die hydraulische Betätigung der Koppeleinrichtung aus der Neutralposition heraus, so dass letztgenannte mit einem der Losräder in, insbesondere formschlüssige und drehfeste, Verbindung bringbar ist.

Die Koppeleinrichtung ist vorzugsweise eine Schaltmuffe.

Vorteilhaft ist die Getriebeanordnung in einem Fahrantrieb, insbesondere dem einer mobilen Arbeitsmaschine, verbaut, wobei insbesondere die erste Hydromaschine mit einer Antriebsmaschine des Fahrantriebs und die Ausgangswelle mit einem Rad oder einer Achse des Fahrantriebs gekoppelt sind.

Ein Verfahren zur Steuerung einer Getriebeanordnung, die gemäß wenigstens einem der Aspekte der vorhergehenden Beschreibung ausgebildet ist, dient dem Wechsel von einer, insbesondere eingelegten, ersten der Getriebestufen (erster Gang) zu einer, insbesondere einzulegenden, zweiten der Getriebestufen (zweiter Gang), oder umgekehrt. Erfindungsgemäß weist das Verfahren einen Schritt "Festlegen der Koppeleinrichtung in der Neutralposition zwischen den Getriebestufen" auf. Dies bringt den bereits erwähnten Vorteil mit sich, dass auf diese Weise die Drehzahlsynchronisierung über die Verstellung der Hydromaschinen sicher durchgeführt werden kann.

In einer Weiterbildung des Verfahrens weist die Getriebeanordnung zum hydraulischen Betätigen der Koppeleinrichtung den bereits erwähnten Hydrozylinder auf, in dem der Kolben angeordnet ist, über den die zwei einander entgegenwirkenden Zylinderräume abschnittsweise begrenzt sind. Dabei enthält der Schritt "Festlegen der Koppeleinrichtung ..." einen Schritt "hydraulisches Einspannen des Kolbens mittels Haltedrücken der Zylinderräume". Die Haltedrücke sind dabei vorzugsweise an die den jeweiligen Zylinderraum begrenzenden Kolbenflächen angepasst. Alternativ oder ergänzend enthält der Schritt "Festlegen der Koppeleinrichtung ..." einen Schritt "mechanisches Festlegen, insbesondere über ein Rastmittel".

In einer Weiterbildung des Verfahrens erfolgt vor dem Schritt "Festlegen der Koppeleinrichtung ..." ein Schritt "hydraulisches Betätigen der Koppeleinrichtung in die Neutralposition mittels Regelung weg- und / oder zeitabhängiger Druckprofile der Zylinderräume". Auf diese Weise kann selbst gegen hohe Losbrechkräfte und zudem mit hoher Geschwindigkeit und prozesssicher die Koppeleinrichtung in die Neutralposition betätigt werden.

Zur wegabhängigen Regelung der Druckprofile weist die Getriebeanordnung vorzugsweise eine Wegerfassungseinheit auf, über die der Verstellweg der Koppeleinrichtung und / oder des Kolbens des Hydrozylinders erfassbar und an die Steuereinrichtung übermittelbar ist.

In einer ersten und einer zweiten weitergebildeten Variante des Verfahrens weist der Schritt "hydraulisches Betätigen der Koppeleinrichtung in die Neutralposition mittels Regeln weg- und / oder zeitabhängiger Druckprofile der Zylinderräume" einen ersten Schritt "Absenken des Druckes des entgegen einer Betätigungsrichtung wirkenden Zylinderraumes, insbesondere etwa auf einen Druck der Druckmittelsenke" auf. Auf diese Weise wird zunächst der Druck abgesenkt, über den die zu diesem Zeitpunkt eingelegte Getriebestufe gehalten wird.

In einer Weiterbildung dieser beiden Varianten des Verfahrens weist der Schritt "hydraulisches Betätigen der Koppeleinrichtung in die Neutralposition mittels Regeln weg- und / oder zeitabhängiger Druckprofile der Zylinderräume" einen zweiten Schritt "Erhöhen des Druckes des in die Betätigungsrichtung wirkenden Zylinderraumes" auf. Dabei erfolgt der zweite Schritt abschnittsweise überlappend mit dem ersten Schritt oder im Anschluss an den ersten Schritt. Durch diese Erhöhung des Druckes im genannten Zylinderraum nähert sich die am Kolben angreifende, resultierende Kraft einer Losbrechkraft, ab der der Kolben, und damit die Koppeleinrichtung in axiale Bewegung geraten.

In einer dazu alternativen dritten Variante erfolgen der erste und der zweite Schritt zeitgleich.

In einer Weiterbildung der dritten Variante erfolgen nach einem Losbrechen des Kolbens etwa zeitgleich ein Schritt "Erhöhen des Drucks des entgegen der Betätigungsrichtung wirkenden Zylinderraumes" und "Absenken des Druckes des in die Betätigungsrichtung wirkenden Zylinderraumes" bis hin zum jeweiligen Haltedruck. Erreicht werden die Haltedrücke dabei vorzugsweise mit Erreichen der Neutralposition.

Die erste Variante und die zweite Variante des Verfahrens sind vorzugsweise derart weitergebildet, dass der Schritt "Erhöhen des Druckes des in die Betätigungsrichtung wirkenden Zylinderraumes" bis etwa zu einem Losbrechen des Kolbens (erste Variante) oder darüber hinaus (zweite Variante) erfolgt.

Die erste Variante ist vorzugsweise derart weitergebildet, dass nach dem Losbrechen ein Schritt "Absenken des Druckes des in die Betätigungsrichtung wirkenden Zylinderraumes, insbesondere auf den Druck der Druckmittelsenke" erfolgt. Auf diese Weise ist der Kolben mit niedrigen Haltedrücken hydraulisch einspannbar. Erreicht werden die Haltedrücke vorzugsweise mit Erreichen der Neutralposition.

Die zweite Variante des Verfahrens ist vorzugsweise derart weitergebildet, dass nach dem Losbrechen, wie bereits erwähnt, der Druck des in Betätigungsrichtung wirksamen Zylinderraumes weiter erhöht wird. Das heißt es erfolgt nach dem Losbrechen ein Schritt "Erhöhen des Druckes des in die Betätigungsrichtung wirkenden Zylinderraumes bis zu einem Druck der Druckmittelquelle" und ein Schritt "Erhöhen des Druck des entgegen der Betätigungsrichtung wirkenden Zylinderraumes". Auf diese Weise ist der Kolben mit hohen Drücken hydraulisch einspannbar. Erreicht werden diese Drücke oder Haltedrücke vorzugweise mit Erreichen der Neutralposition.

In einer vierten Variante des Verfahrens weist der Schritt "hydraulisches Betätigen der Koppeleinrichtung in die Neutralposition mittels Regeln weg- und / oder zeitabhängiger Druckprofile der Zylinderräume" etwa gleichzeitige Schritte "Halten des Druckes des entgegen einer Betätigungsrichtung wirkenden Zylinderraumes auf einem Niveau zwischen der Druckmittelquelle und der Druckmittelsenke" und "Erhöhen des Druckes des in die Betätigungsrichtung wirkenden Zylinderraumes bis etwa zu einem Druck der Druckmittelquelle" auf. Etwa mit Erreichen des Drucks der Druckmittelquelle im in die Betätigungsrichtung wirkenden Zylinderraum erfolgt dann ein Schritt "Absenken des Druckes des entgegen der Betätigungsrichtung wirkenden Zylinderraumes", wobei im Folgenden etwa mit dem Losbrechen des Kolbens ein Schritt "(Wieder-) Erhöhen des Druckes im entgegen der Betätigungsrichtung wirkenden Zylinderraum" erfolgt. Auf diese Weise ist der Kolben mit mittleren Haltedrücken einspannbar.

In einer Weiterbildung des Verfahrens, wobei wenigstens eine der Hydromaschinen ein verstellbares Verdrängungsvolumen aufweist und eine Triebwelle einer zweiten Hydromaschine mit der Eingangswelle gekoppelt ist, erfolgt etwa zeitgleich mit dem Schritt "hydraulisches Betätigen der Koppeleinrichtung in die Neutralposition mittels Regelung weg- und / oder zeitabhängiger Druckprofile der Zylinderräume" ein Schritt "Reduzieren eines Drehmomentes der Triebwelle der zweiten Hydromaschine, insbesondere der Eingangswelle, auf null oder etwa null". Wie bereits erwähnt erfolgt diese Drehmomentreduzierung beispielsweise durch eine Reduzierung des zweiten Verdrängungsvolumens der zweiten Hydromaschine und / oder über die besprochene Regelung des Differenzdrucks an der zweiten Hydromaschine.

In einer Weiterbildung des Verfahrens erfolgt etwa mit Erreichen der Neutralposition ein Schritt "Synchronisieren der Drehzahl der Eingangswelle mit der Drehzahl der Ausgangswelle in Abhängigkeit der Übersetzung der einzulegenden Getriebestufe durch Verstellen wenigstens eines Verdrängungsvolumens der Hydromaschinen". Auf diese Weise erfolgt die Drehzahlsynchronisation nur hydraulisch und es kann auf die bisher herkömmlichen Reibelemente an der Koppeleinrichtung und den Losrädern der Getriebestufen verzichtet werden.

Sind die Drehzahlen synchronisiert, so kann die Koppeleinrichtung aus der Neutralposition heraus über die weitergehende hydraulische Betätigung formschlüssig in das Losrad der einzulegenden Getriebestufe eingerückt werden. Dann ist der Schaltvorgang abgeschlossen.

Ein Ausführungsbeispiel eines Fahrantriebs mit erfindungsgemäßer Getriebeanordnung, sowie vier Ausführungsbeispiele eines erfindungsgemäßen Verfahrens sind in den Zeichnungen dargestellt. Anhand der Figuren dieser Zeichnungen wird die Erfindung nun näher erläutert. Es zeigen:
Figur 1 einen Schaltplan eines Fahrantriebs mit erfindungsgemäßer Getriebeanordnung,
Figur 2 eine Ventilanordnung der Getriebeanordnung gemäß Figur 1 zur Steuerung eines Getriebestufenwechsels,
Figur 3 ein Blockdiagramm eines erfindungsgemäßen Verfahrens zur Steuerung des Gangswechsels,
Figur 4 eine Schaltmuffe des Schaltgetriebes der erfindungsgemäßen Getriebeanordnung in demontiertem Zustand, und
Figuren 5 bis 8 zeit- und wegabhängige Druckverläufe in Kammern eines Hydrozylinders der Getriebeanordnung beim Wechsel von einer Getriebestufe in eine Neutralposition zwischen den Getriebestufen.

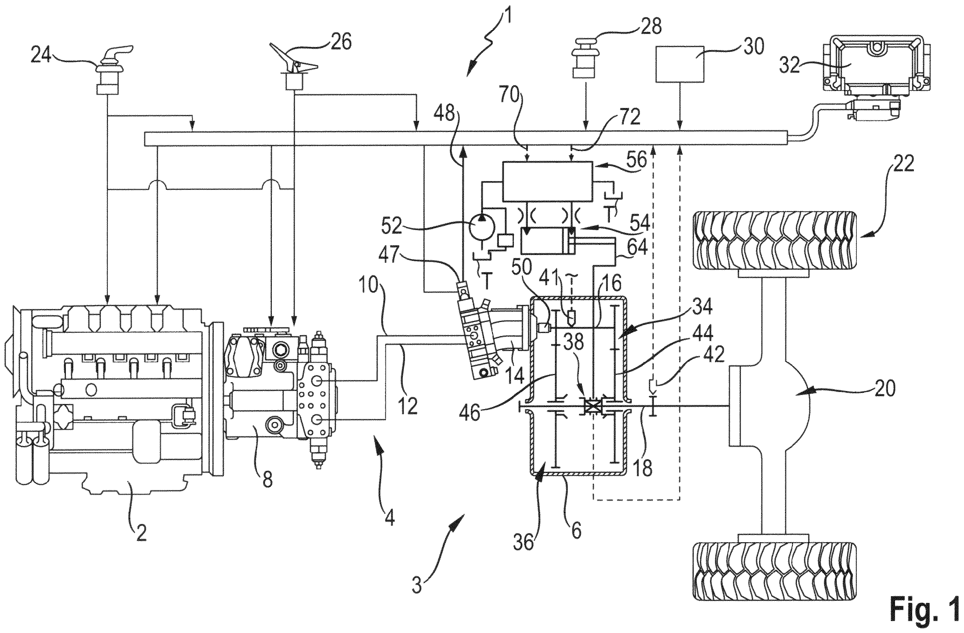

Figur 1 zeigt einen Fahrantrieb 1 einer mobilen Arbeitsmaschine mit einer Getriebeanordnung 3. Diese hat eine als Dieselmotor ausgebildete Antriebsmaschine 2, ein hydrostatisches Getriebe 4 und ein im Ausführungsbeispiel zweistufiges Schaltgetriebe 6. Das hydrostatische Getriebe 4 hat eine erste, als Axialkolbenpumpe in Schrägscheibenbauweise ausgestaltete Hydromaschine 8, die über zwei Arbeitsleitungen 10, 12 mit einer zweiten, als Axialkolbenmotor in Schrägachsenbauweise ausgebildeten Hydromaschine 14 fluidisch in einem geschlossenen hydraulischen Kreis verbunden ist. Eine Triebwelle der ersten Hydromaschine 8 ist mit einer Antriebswelle der Antriebsmaschine 2 gekoppelt. Eine Triebwelle der zweiten Hydromaschine 14 ist mit einer Eingangswelle 16 des Schaltgetriebes 6 gekoppelt. Eine Ausgangswelle 18 des Schaltgetriebes 6 ist mit einem Differential 20 einer zweirädrigen Achse 22 gekoppelt. Die beiden Hydromaschinen 8, 14 weisen jeweils ein verstellbares Verdrängungsvolumen auf. Sie sind dabei derart ausgestaltet, dass sie in allen vier Quadranten, also in beiden Durchflussrichtungen des Druckmittels sowohl als Hydropumpe als auch als Hydromotor arbeiten können.

Des Weiteren hat die Getriebeanordnung 3 einen Gashebel 24, ein Fahrpedal 26, einen Schaltknopf 28, einen Geschwindigkeitssensor 30, sowie eine Steuereinrichtung 32. Das Schaltgetriebe 6 hat eine erste Getriebestufe 36 mit einer geringen Übersetzung und eine zweite Getriebestufe 34 mit einer großen Übersetzung der Drehzahl der Ausgangswelle 18 zur Drehzahl der Eingangswelle 16. Des Weiteren hat das Schaltgetriebe 6 eine Schaltmuffe 38, die von einem Hydrozylinder 54 für Gangwechsel betätigbar ist. Der Hydrozylinder 54 ist zu seiner Druckmittelversorgung über eine Ventilanordnung 56 mit einer Druckmittelquelle 56 und einer Druckmittelsenke T fluidisch verbindbar. Das Schaltgetriebe 6 ist dabei derart ausgestaltet, dass es während der Fahrt schaltbar ist.

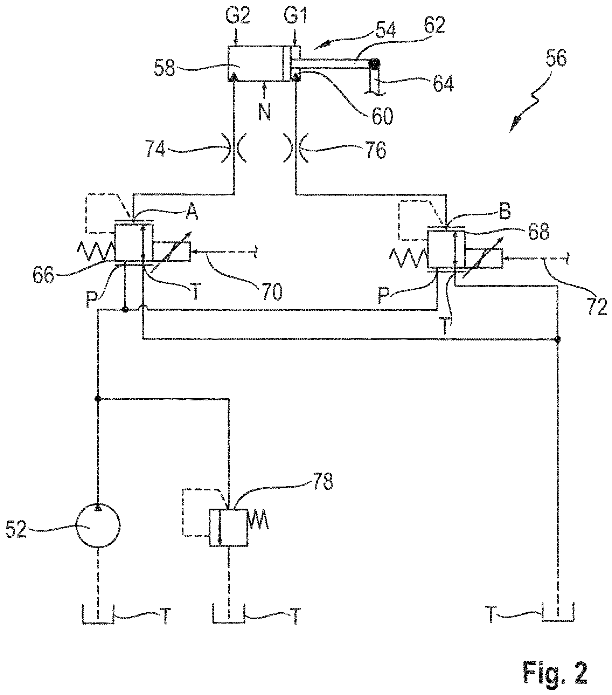

Gemäß Figur 1 hat die Getriebeanordnung 3 eine als Speisepumpe mit konstantem Verdrängungsvolumen ausgebildete Druckmittelquelle 52, eine als Tank ausgebildete Druckmittelsenke T, einen doppeltwirkend ausgebildeten Hydrozylinder 54 zur Betätigung der Schaltmuffe 38 und eine Ventilanordnung 56 zur Druckmittelversorgung des Hydrozylinders 54. Die genauere hydraulische Schaltung und Funktionsweise der Ventilanordnung 56 beim Getriebestufenwechsel wird anhand Figur 2 erläutert. Gemäß den Figuren 1 und 2 hat der Hydrozylinder 54 eine erste, kolbenbodenseitige Kammer 58 und eine zweite, kolbenstangenseitige Kammer 60. Eine Kolbenstange 62 ist über ein Koppelgestänge 64 mechanisch mit der Schaltmuffe 38 gekoppelt. Die Ventilanordnung 56 hat ein erstes Druckreduzierventil 66, über das die Druckmittelquelle 52 mit der ersten Kammer 58 fluidisch verbindbar ist, und ein zweites Druckreduzierventil 68, über das die Druckmittelquelle 52 mit der zweiten Kammer 60 fluidisch verbindbar ist. Dabei weist jedes Druckreduzierventil 66, 68 einen Druckanschluss P auf, der mit der Druckmittelquelle 52 fluidisch verbunden ist. Des Weiteren weist das erste Druckreduzierventil 66 einen Arbeitsanschluss A, der mit der ersten Kammer 58 verbunden ist, und das Druckreduzierventil 68 einen Arbeitsanschluss B auf, der mit der zweiten Kammer 60 verbunden ist. Jedes Druckreduzierventil 66, 68 weist zudem einen Tankanschluss T auf, der mit dem Tank T verbunden ist. Über eine jeweilige Signalleitung 70, 72 sind die Druckreduzierventile 66, 68 mit der Steuereinrichtung 32 gemäß Figur 1 signalverbunden. Beide Druckreduzierventile 66, 68 sind elektromagnetisch betätigbar.

In einem Druckmittelströmungspfad zwischen dem Arbeitsanschluss A beziehungsweise B und der ersten Kammer 58 bzw. zweiten Kammer 60 ist jeweils eine Düse 74 beziehungsweise 76 angeordnet. Die Druckanschlüsse P sind gegen Überdruck über ein Druckbegrenzungsventil 78 abgesichert.

Anstatt der verwendeten Proportional-Druckreduzierventile 66, 68 kann alternativ beispielsweise ein Stromregelventil verwendet werden.

Im Folgenden wird ein Schaltvorgang vom ersten Gang G1 (erste Getriebestufe 34) in den zweiten Gang G2 (zweite Getriebestufe 36) beschrieben.

Der Kolben des Hydrozylinders 54 ist gemäß den Figuren 1 und 2 bei eingelegtem ersten Gang G1 ganz zur Kolbenstangenseite eingerückt. In diesem Zustand ist die erste Getriebestufe 34 durch einen hohen Haltedruck in der ersten Kammer 58 sicher festgelegt. Durch eine schaltmuffenwegabhängige Bestromung der Druckreduzierventile 66, 68 und die dadurch geregelten, schaltmuffenwegabhängigen Druckprofile der Kammern 58, 60, soll nun der Kolben sicher und robust von dieser Position G1 in eine Neutralposition N verfahren werden. In dieser kann dann eine Drehzahlsynchronisierung zwischen der Eingangswelle 16 und der Ausgangswelle 18 erfolgen. Diese erfolgt allein hydraulisch durch die genannte Verstellung der Verdrängungsvolumina der Hydromaschinen 8, 14, weshalb das Schaltgetriebe keine Reibelemente zur Drehzahlsynchronisierung benötigt. Darauf folgend wird dann der Kolben in Richtung des zweiten Ganges G2, also in Richtung dem Einlegen der zweiten Getriebestufe 36, verschoben.

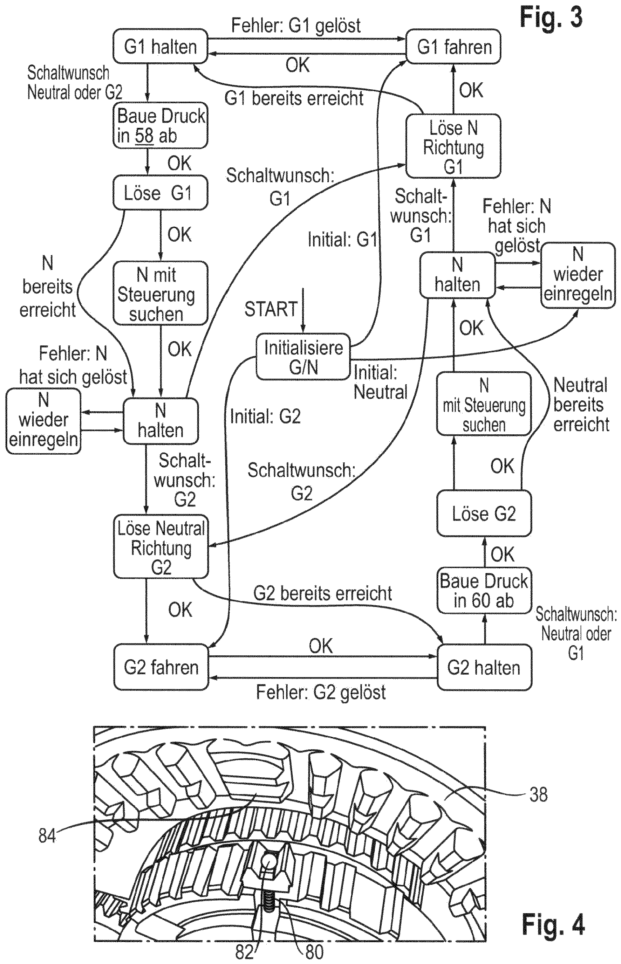

Die in den folgenden Figuren 3 und 5 bis 8 beschriebenen vier Verfahrensvarianten zum beabsichtigten Getriebestufenwechsel unterscheiden sich im Wesentlichen darin, wie beim Verschieben der Schaltmuffe 38 in die Neutralposition der jeweilige weg- und zeitabhängige Verlauf des Druckes in den Kammern 58, 60 über die Druckreduzierventile 66, 68 und die Düsen 74, 76 geregelt wird. Nach der hydraulischen Drehzahlsynchronisation erfolgt die Betätigung von der Neutralposition in den einzulegenden Gang bei allen Verfahrensvarianten gleich, nämlich vorzugsweise mit maximaler Druckdifferenz zwischen den Kammern 58 und 60, um eine kurze Schaltzeit zu erzielen. Im Folgenden wird daher lediglich der Teilprozess "Einlegen der Neutralposition ausgehend von dem eingelegten Gang" näher betrachtet. Da auch der Vorgang des Einlegen des neuen Ganges aus der Neutralposition heraus in allen Varianten und in allen Richtungen (G1 => G2 und G2 => G1) gleich ist, erfolgt die Beschreibung allein des Teilprozesses "Auslegen des ersten Ganges G1 in die Neutralposition N".

Figur 3 zeigt ein in der Steuereinrichtung 32 zur Ausführung gespeichertes, erfindungsgemäßes Verfahren zur Steuerung von Getriebestufenwechseln der Getriebeanordnung 3.

Figur 4 zeigt eins von mehreren, umfänglich an der Ausgangswelle 18 gleichverteilt angeordneten, mechanischen Rastmitteln. Über diese kann die Schaltmuffe 38 des Ausführungsbeispiels mechanisch in der Neutralposition N festlegt werden. Das Rastmittel hat dabei ausgangswellenseitig eine über eine Feder 80 nach radial außen vorgespannte Kugel 82. Die ringförmig ausgebildete Schaltmuffe 38 (zur besseren Darstellung demontiert und verkippt dargestellt) hat radial innen eine quer zu ihrer axialen Betätigungsrichtung verlaufende Rastnut 84. In diese kann die Kugel 82 in der Neutralposition N einrasten. Dies führt zur axialen Stabilisierung der Schaltmuffe 38 in der Neutralposition N und es können Restkräfte beim Verschieben des Kolbens in die Neutralposition kompensiert werden. Der Kolben kann so in der Neutralposition "aufgefangen" werden.

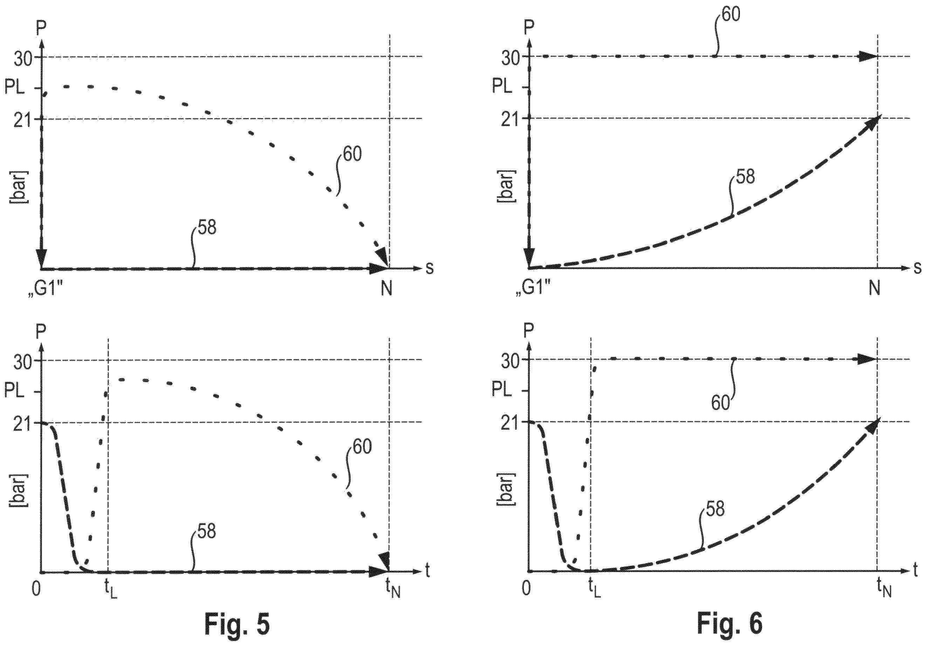

Wie in den Figuren 1 und 2 gezeigt, befindet sich der Kolben des Hydrozylinders 54 zu Beginn des Schaltvorgangs in der Position G1 der ersten Getriebestufe 34. Die Figuren 5 - 8 zeigen jeweils in einem oberen Diagramm den wegabhängigen Druckverlauf in den Kammern 58, 60 und im jeweiligen unteren Diagramm den zeitlichen Verlauf dieser Drücke. Der Druckverlauf in der ersten Kammer 58 ist dabei gestrichelt, derjenige in der zweiten Kammer 60 gepunktet dargestellt. Zum besseren Verständnis sind den jeweiligen Druckkurven die Bezugszeichen der zugehörigen Kammern 58, 60 zugeordnet.

Gemäß Figur 5 beträgt der Haltedruck in der ersten Kammer 58 in der Position G1 etwa 21 bar. Die Druckmittelquelle 52 gemäß Figur 1 stellt dabei einen maximalen Steuerdruck von etwa 30 bar zur Verfügung. Gegen dessen Überschreitung ist das System über das Druckbegrenzungsventil 78 gemäß Figur 2 abgesichert. Auf diese Weise ist zu Beginn des Gangwechsels der Kolben des Hydrozylinders 54 in die Position G1 eingespannt, da gleichzeitig der Druck in der zweiten Kammer 60 gemäß Figur 5 null bar, bezogen auf Tankdruck, beträgt. Über die Steuereinrichtung 32 wird in der ersten Kammer 58 der Druck gemäß der gestrichelten Kurve zunächst schnell auf 0,5 bar, bezogen auf Trankdruck, gesenkt, während in der zweiten Kammer 60 nach wie vor 0 bar anstehen (vergleiche unteres Diagramm). Auf diese Weise wird ein vorzeitiges Lösen des Ganges G1 verhindert und diese zeitabhängige Steuerung der Drücke kann bereits während eines Zurückschwenkens des Hydromotors 14 zur Verringerung seines Verdrängungsvolumens und der Verringerung des Drehmoments der Triebwelle 50 auf etwa 0 erfolgen, ohne dass ein vorzeitiges Lösen des ersten Ganges G1 droht. Dadurch wird der Gangwechsel schnell. Ist der Druck in der ersten Kammer 58 auf etwa 0,5 bar abgebaut, so beginnt das schnelle Hochregeln des Druckes in der zweiten Kammer 60 über das Druckreduzierventil 68. Zum Zeitpunkt t_{L} ist die auf den Kolben wirkende Druckkraft der zweiten Kammer 60 ausreichend groß, dass der Kolben losbrechen kann. Dies geschieht beim Losbrechdruck p_{L} gemäß Figur 5. Der Kolben bewegt sich nun. Es wird gemäß dem in Figur 3 dargestellten Verfahren eine gesteuerte Verschiebung des Kolbens eingeleitet. Dies geschieht gemäß der Figur 5 durch eine abfallende Cosinusflanke des Druckes in der zweiten Kammer 60. Über die Steuereinrichtung 32 und die davon angesteuerten Druckreduzierventile 66, 68 werden die Drücke in den Kammern 58, 60 derart geregelt, dass der Kolben die Neutralposition N sicher anfährt. Die Düsen 74, 76 dämpfen dabei die Druckmittelvolumenströme der beiden Kammern 58, 60, so dass ein Überschießen des Kolbens über die Neutralposition N hinaus verhindert ist. Im Ausführungsbeispiel gemäß Figur 5 ist in der Neutralposition N zum Zeitpunkt t_{N} der Druck in der ersten Kammer 58 etwa 0,5 bar und in der zweiten Kammer etwa 0 bar. Zum Halten der Neutralposition N dient dann im Wesentlichen ein Rastelement zwischen der Ausgangswelle 18 und der Schaltmuffe 38 (vgl. Figur 4).

Eine zweite Variante des Verfahrens ähnelt im Ausgangspunkt demjenigen gemäß Figur 5. Auch hier wird zu Beginn der Haltedruck in der ersten Kammer 58 abgesenkt und der Gang G1 wird in Folge nur noch mit 0,5 bar Druckdifferenz gehalten. Beim Erreichen des Wertes von 0,5 bar wird dann der Druck in der zweiten Kammer 60 schnellstmöglich auf den maximalen Steuerdruck von 30 bar erhöht. In der ersten Kammer 58 wird dann gemäß Figur 6 unten der Druck gemäß einer umgekehrten Cosinusflanke auf etwa 21 bar gesteuert. Dies erfolgt bis zum Erreichen der Neutralposition N. Der Kolben ist dann hydraulisch in der Neutralposition mit vergleichsweise hohen Drücken von einerseits 30 bar und anderseits 21 bar eingespannt.

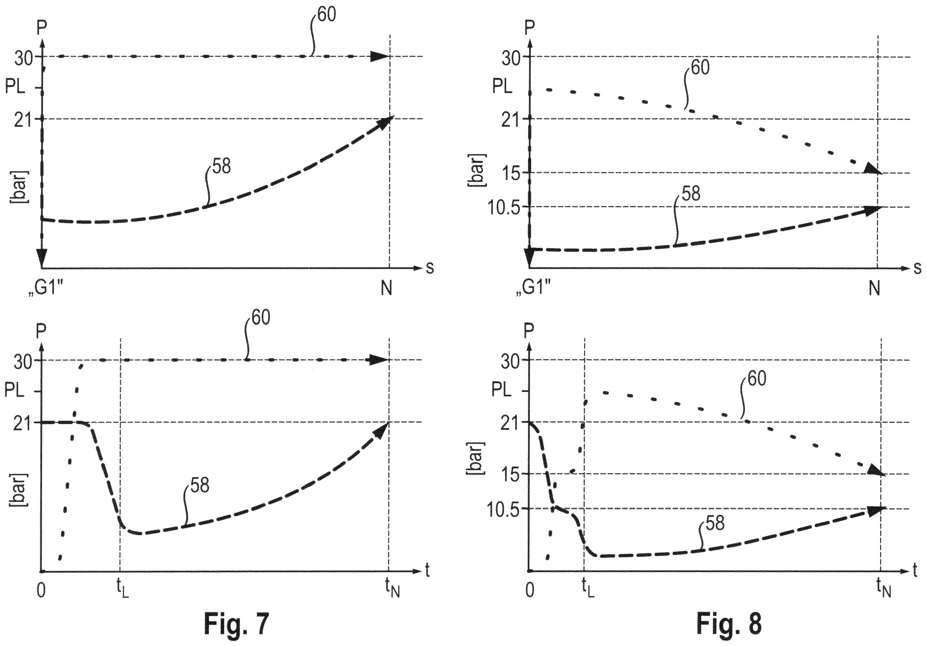

Anders als in den beiden vorangegangenen beiden Verfahrensvarianten wird in einer Variante gemäß Figur 7 zu Beginn des Haltens der Druckausgleich nicht durch das Absenken des Druckes der ersten Kammer 59 begonnen, sondern stattdessen wird in der zweiten Kammer 60 der Druck erhöht. Gleichzeitig wird der Druck in der ersten Kammer 58 gehalten. Dies geht aus dem Diagramm Figur 7 unten hervor. Entgegen dem in Richtung des ersten Ganges G1 wirkenden Haltedruck der ersten Kammer 58 baut sich dadurch ein Druck in der zweiten Kammer 60 auf. Dabei muss beachtet werden, dass zur Vermeidung eines vorzeitigen Lösens des Ganges G1 (bevor die Drehzahlen synchronisiert sind) der in der ersten Kammer 58 anstehende Druck um etwa 0,5 bar höher sein muss als derjenige der zweiten Kammer 60. Sobald das Lösen des Ganges eingeleitet wird, wird der Druck in der Kammer 58 schnell abgesenkt. Dies geschieht so lange, bis sich der Gang löst. Ab dem Losbrechen des Kolbens t_{L} wird der Druck in der ersten Kammer 58 gemäß einer umgekehrten Cosinusflanke wieder auf etwa 21 bar eingeregelt. In der Neutralposition N herrscht dann wieder Kräftegleichgewicht am Kolben wie in den anderen Ausführungsbeispielen. Der Kolben ist dann mit maximal möglichem hydraulischem Druck eingespannt.

Im vierten Ausführungsbeispiel gemäß Figur 8 wird der Druckausgleich in den Kammern 58, 60 zu Beginn des Schaltens parallel durch Veränderung der beiden Drücke in den beiden Kammern 58, 60 vorgenommen. Dabei wird der Druck in der ersten Kammer 58 auf etwa 10,5 bar abgesenkt. Gleichzeitig wird der Druck in der zweiten Kammer 60 auf etwa 15 bar erhöht. Dabei ist zunächst sichergestellt, dass der Druck in der ersten Kammer 58 ausreicht, den Gang G1 zu halten. Wird nun das Lösen des Ganges G1 eingeleitet, so wird der Druck in der ersten Kammer 58 weiter abgesenkt und in der zweiten Kammer 60 wird der Druck hingegen erhöht. Sobald das Losbrechen des Kolbens erfolgt, werden die Drücke cosinusförmig zurück auf 15 bar (zweite Kammer 60) und 10,5 bar (erste Kammer 58) eingeregelt. In der Neutralposition N ist der Kolben dann mit mittlerem Druck eingespannt.

Es sei darauf hingewiesen, dass die genannten Drücke auf das jeweilige Kolbenflächenverhältnis der Ausführungsbeispiele abgestimmt sind. Für andere Kolbenflächenverhältnisse gelten entsprechend abweichende Druckverläufe und Haltedrücke in der Neutralposition N.

Für alle Ausführungsbeispiele gilt, dass die hydraulische Synchronisation der Drehzahlen der beiden Wellen 16 und 18 über die Steuereinrichtung 32 wie folgt gesteuert wird: Ist eine Schaltanforderung oder eine Anforderung zum Schalten in die Neutralposition ergangen, so wird über die Steuereinrichtung 32 das Verdrängungsvolumen der zweiten Hydromaschine 14 (Hydromotor) innerhalb von einigen Millisekunden auf einen Wert nahe und ungleich 0 cm³ verstellt. Das Verdrängungsvolumen und das daraus resultierende interne Drehmoment der zweiten Hydromaschine 14 reicht dann aus, das Triebwerk der zweiten Hydromaschine 14 hydraulisch mitzuschleppen, so dass von ihr kein Antriebsmoment auf die Eingangswelle 16, und umgekehrt, kein Schleppmoment von der Eingangswelle 16 auf die zweite Hydromaschine 14 übertragen wird. Zwischen dem hydrostatischen Getriebe 4 und dem Schaltgetriebe 6 herrscht dann Drehmomentfreiheit. Erst wenn die Drehmomentfreiheit gegeben ist, darf das in den Ausführungsbeispielen genannte Losbrechen des Kolbens erfolgen.

Offenbart ist eine Getriebeanordnung mit einem hydrostatischen und einem damit in Reihe gekoppelten Schaltgetriebe mit zwei wechselbaren Getriebestufen, über die eine Eingangswelle des Schaltgetriebes mit dessen Ausgangswelle in übersetzte Drehverbindung bringbar ist, wobei zum Wechsel der Getriebestufen eine hydraulisch betätigbare Koppeleinrichtung vorgesehen ist. Dabei ist die Koppeleinrichtung in einer Neutralposition zwischen den Getriebestufen, in der die Drehverbindung gelöst ist, sicher festlegbar. Ein Betätigen der Koppeleinrichtung in die Neutralposition erfolgt dabei insbesondere über ein Betätigungsweg- und / oder Betätigungszeitabhängig geregeltes oder gesteuertes Druckprofil wenigstens eines hydrostatischen Arbeitsraumes, insbesondere eines Hydrozylinders.

Offenbart sind weiterhin ein Fahrantrieb mit einer derartigen Getriebeanordnung und ein Verfahren zur Steuerung der Getriebeanordnung.

### Bezugszeichenliste

- 1: Fahrantrieb
- 2: Antriebsmaschine
- 3: Getriebeanordnung
- 4: hydrostatisches Getriebe
- 6: Schaltgetriebe
- 8: erste Hydromaschine
- 10: Arbeitsleitung
- 12: Arbeitsleitung
- 14: zweite Hydromaschine
- 16: Eingangswelle
- 18: Ausgangswelle
- 20: Differential
- 22: Achse
- 24: Gashebel
- 26: Fahrpedal
- 28: Schaltknopf
- 30: Geschwindigkeitssensor
- 32: Steuereinrichtung
- 34: erste Getriebestufe
- 36: zweite Getriebestufe
- 38: Schaltmuffe
- 41, 42: Drehzahlerfassungseinheit
- 44, 46: Losrad
- 47: Erfassungseinrichtung
- 48: Signalleitung
- 50: Triebwelle
- 52: Druckmittelquelle
- 54: Hydrozylinder
- 56: Ventilanordnung
- 58: erste Kammer
- 60: zweite Kammer
- 62: Kolbenstange
- 64: Koppelgestänge
- 66: erstes Druckreduzierventil
- 68: zweites Druckreduzierventil
- 70, 72: Signalleitung
- 74, 76: Düse
- 78: Druckbegrenzungsventil
- 80: Feder
- 82: Kugel
- 84: Rastnut

- T: Tank
- G1: Position erste Getriebestufe / erster Gang
- G2: Position zweite Getriebestufe / zweiter Gang
- N: Neutralposition
- t_{L}: Losbrechzeitpunkt
- t_{N}: Neutralpositionszeitpunkt
- p_{L}: Losbrechdruck

## Patentansprüche

1. Getriebeanordnung, insbesondere für einen Fahrantrieb (1), mit einem hydrostatischen Getriebe (4) mit zwei in einem hydraulischen Kreis angeordneten Hydromaschinen (8, 14), und mit einem damit in Reihe gekoppelten Schaltgetriebe (6) mit wenigstens zwei wechselbaren Getriebestufen (34, 36), über die eine Eingangswelle (16) des Schaltgetriebes (6) mit dessen Ausgangswelle (18) in übersetzte Drehverbindung bringbar ist, wobei zum Wechsel der Getriebestufen (34, 36) eine hydraulisch betätigbare Koppeleinrichtung (38) vorgesehen ist, wobei die Getriebeanordnung (3) derart ausgestaltet ist, dass die Koppeleinrichtung (38) in einer Neutralposition (N), in der die übersetzte Drehverbindung gelöst ist, festlegbar ist, **dadurch gekennzeichnet, dass** die Getriebeanordnung (3) ein Rastmittel (80, 82, 84) zur mechanischen Festlegung aufweist, das die Festlegung in der Neutralposition (N) zusätzlich unterstützt.

2. Getriebeanordnung nach Anspruch 1, wobei die Koppeleinrichtung (38) in der Neutralposition (N) hydraulisch festlegbar ist.

3. Getriebeanordnung nach Anspruch 1 oder 2 mit einem Hydrozylinder (54) zur hydraulischen Betätigung der Koppeleinrichtung (38), in dem ein Kolben angeordnet ist, über den zwei einander entgegenwirkende Zylinderräume (58, 60) abschnittsweise begrenzt sind.

4. Getriebeanordnung nach Anspruch 3, wobei wenigstens einer der Zylinderräume (58, 60) über ein Regelventil (66, 68) der Getriebeanordnung (3) mit einer Druckmittelquelle (52) und einer Druckmittelsenke (T) fluidisch verbindbar sind.

5. Getriebeanordnung nach Anspruch 4, wobei in einem Druckmittelströmungspfad, der sich zwischen dem der Regelventil (66, 68) und dem diesem zugeordneten Zylinderraum (58, 60) erstreckt, eine Düse (74, 76) oder Drossel angeordnet ist.

6. Getriebeanordnung nach einem der vorhergehenden Ansprüche, wobei an einer der Wellen (18) die Koppeleinrichtung (38) drehfest mit der Welle (18) verbunden und axial verschieblich angeordnet ist und Losräder (44, 46) der beiden Getriebestufen (34, 36) drehbar und axial bestimmt angeordnet sind, und wobei die Koppeleinrichtung (38) hydraulisch betätigt mit jeweils einem der Losräder (44, 46) in drehfeste Verbindung bringbar ist.

7. Fahrantrieb mit einer Getriebeanordnung (3), die gemäß einem der vorhergehenden Ansprüche ausgestaltet ist.

8. Verfahren zur Steuerung einer Getriebeanordnung (3), die gemäß einem der Patentansprüche 1 bis 6 ausgebildet ist, zum Wechsel von einer ersten (34) der Getriebestufen (34, 36) zu einer zweiten (36) der Getriebestufen (34, 36), mit dem Schritt
- Festlegen der Koppeleinrichtung (38) in der Neutralposition (N) zwischen den Getriebestufen (34, 36) **gekennzeichnet durch** den Schritt
- zusätzliche Unterstützung des Festlegens mittels eines Rastmittels zur mechanischen Festlegung.

9. Verfahren nach Anspruch 8, wobei die Getriebeanordnung (3) zum hydraulischen Betätigen der Koppeleinrichtung (38) einen mit dieser gekoppelten Hydrozylinder (54) hat, in dem ein Kolben angeordnet ist, über den zwei einander entgegenwirkende Zylinderräume (58, 60) abschnittsweise begrenzt sind, wobei der Schritt Festlegen der Koppeleinrichtung (38), einen Schritt
- Hydraulisches Einspannen des Kolbens mittels Haltedrücken der Zylinderräume (58, 60) und / oder einen Schritt
- Mechanisches Festlegen enthält

10. Verfahren nach Anspruch 9, wobei vor dem Schritt Festlegen der Koppeleinrichtung (38), ein Schritt
- Hydrauliches Betätigen der Koppeleinrichtung (38) in die Neutralposition (N) mittels Regelung weg- und / oder zeitabhängiger Druckprofile der Zylinderräume (58, 60) erfolgt.

11. Verfahren nach Anspruch 10, wobei der Schritt
- Hydrauliches Betätigen der Koppeleinrichtung (38) in die Neutralposition (N) mittels Regeln weg- und / oder zeitabhängiger Druckprofile der Zylinderräume (58, 60) einen ersten Schritt
- Absenken des Druckes des entgegen einer Betätigungsrichtung wirkenden Zylinderraumes (58), insbesondere etwa auf einen Druck der Druckmittelsenke (T) aufweist.

12. Verfahren nach Anspruch 11, wobei der Schritt
- Hydraulisches Betätigen der Koppeleinrichtung (38) in die Neutralposition (N) mittels Regeln weg- und / oder zeitabhängiger Druckprofile der Zylinderräume (58, 60) einen zweiten Schritt
- Erhöhen des Druckes des in die Betätigungsrichtung wirkenden Zylinderraumes (60) aufweist, der abschnittsweise überlappend mit dem ersten Schritt oder im Anschluss an den ersten Schritt erfolgt.

13. Verfahren nach Anspruch 12, wobei der zweite Schritt zeitgleich mit dem ersten Schritt erfolgt.

14. Verfahren nach Anspruch 13, wobei nach einem Losbrechen des Kolbens etwa zeitgleich Schritte Erhöhen des Druckes des entgegen der Betätigungsrichtung wirkenden Zylinderraumes (58) und Absenken des Druckes des in die Betätigungsrichtung wirkenden Zylinderraumes (60) bis hin zum jeweiligen Haltedruck erfolgt.

## Claims

1. Transmission arrangement, in particular for a propulsion drive (1), with a hydrostatic transmission (4) with two hydraulic machines (8, 14) which are arranged in a hydraulic circuit, and with a manual transmission (6) which is coupled in series with the said hydrostatic transmission (4), with at least two changeable transmission stages (34, 36), via which an input shaft (16) of the manual transmission (6) can be brought into a stepped-up rotary connection with its output shaft (18), a hydraulically actuable coupling device (38) being provided for changing the transmission stages (34, 36), the transmission arrangement (3) being configured in such a way that the coupling device (38) can be fixed in a neutral position (N), in which the stepped-up rotary connection is released, **characterized in that** the transmission arrangement (3) has a latching means (80, 82, 84) for mechanical fixing, which latching means (80, 82, 84) additionally assists the fixing in the neutral position (N).

2. Transmission arrangement according to Claim 1, it being possible for the coupling device (38) to be fixed hydraulically in the neutral position (N).

3. Transmission arrangement according to Claim 1 or 2 with a hydraulic cylinder (54) for hydraulically actuating the coupling device (38), in which hydraulic cylinder (54) a piston is arranged, via which two cylinder chambers (58, 60) which act counter to one another are delimited in sections.

4. Transmission arrangement according to Claim 3, it being possible for at least one of the cylinder chambers (58, 60) to be connected fluidically via a regulating valve (66, 68) of the transmission arrangement (3) to a pressure medium source (52) and a pressure medium sink (T) .

5. Transmission arrangement according to Claim 4, a nozzle (74, 76) or throttle being arranged in a pressure medium flow path which extends between the regulating valve (66, 68) and the cylinder chamber (58, 60) which is assigned to the said regulating valve (66, 68).

6. Transmission arrangement according to one of the preceding claims, the coupling device (38) being connected fixedly to the shaft (18) so as to rotate with it and being arranged axially displaceably on one of the shafts (18), and idler gears (44, 46) of the two transmission stages (34, 36) being arranged rotatably and in an axially defined manner, and it being possible for the coupling device (38) to be brought into a fixed connection in a hydraulically actuated manner with in each case one of the idler gears (44, 46) so as to rotate with it.

7. Propulsion drive with a transmission arrangement (3) which is configured according to one of the preceding claims.

8. Method for controlling a transmission arrangement (3) which is configured according to one of Patent Claims 1 to 6, for changing from a first one (34) of the transmission stages (34, 36) to a second one (36) of the transmission stages (34, 36), with the step of
- fixing of the coupling device (38) in the neutral position (N) between the transmission stages (34, 36),
**characterized by** the step of
- additional assisting of the fixing by means of a latching means for mechanical fixing.

9. Method according to Claim 8, the transmission arrangement (3) having, for hydraulically actuating the coupling device (38), a hydraulic cylinder (54) which is coupled to the said coupling device (38) and in which a piston is arranged, via which two cylinder chambers (58, 60) which act counter to one another are delimited in sections, the step of fixing of the coupling device (38) comprising a step of
- hydraulic clamping of the piston by means of holding pressures of the cylinder chambers (58, 60),
and/or a step of
- mechanical fixing.

10. Method according to Claim 9, a step of
- hydraulic actuating of the coupling device (38) into the neutral position (N) by means of regulation of distance-dependent and/or time-dependent pressure profiles of the cylinder chambers (58, 60)
taking place before the step of fixing of the coupling device (38).

11. Method according to Claim 10, the step of
- hydraulic actuating of the coupling device (38) into the neutral position (N) by means of regulation of distance-dependent and/or time-dependent pressure profiles of the cylinder chambers (58, 60)
having a first step of
- lowering of the pressure of the cylinder chamber (58) which acts counter to an actuating direction, in particular approximately to a pressure of the pressure medium sink (T).

12. Method according to Claim 11, the step of
- hydraulic actuating of the coupling device (38) into the neutral position (N) by means of regulation of distance-dependent and/or time-dependent pressure profiles of the cylinder chambers (58, 60)
having a second step of
- increasing of the pressure of the cylinder chamber (60) which acts in the actuating direction,
which second step takes place in sections in an overlapping manner with the first step or following the first step.

13. Method according to Claim 12, the second step taking place at the same time as the first step.

14. Method according to Claim 13, the steps of i
ncreasing of the pressure of the cylinder chamber (58) which acts counter to the actuating direction, and
lowering of the pressure of the cylinder chamber (60) which acts in the actuating direction
as far as the respective holding pressure taking place approximately at the same time after the breakaway of the piston.

## Revendications

1. Système de transmission, en particulier pour un entraînement de conduite (1), comprenant une transmission hydrostatique (4) avec deux machines hydrauliques (8, 14) disposées dans un circuit hydraulique et avec une boîte de vitesses (6) accouplée en série avec celles-ci, comprenant au moins deux étages de transmission commutables (34, 36), par le biais desquels un arbre d'entrée (16) de la boîte de vitesses (6) peut être amené en liaison rotative démultipliée avec son arbre de sortie (18), dans lequel, pour la commutation des étages de transmission (34, 36), un dispositif d'accouplement (38) à commande hydraulique est prévu, le système de transmission (3) étant configuré de telle sorte que le dispositif d'accouplement (38) puisse être fixé dans une position neutre (N) dans laquelle la liaison rotative démultipliée est libérée, **caractérisé en ce que** le système de transmission (3) présente un moyen d'encliquetage (80, 82, 84) pour la fixation mécanique, qui assiste en outre la fixation dans la position neutre (N).

2. Système de transmission selon la revendication 1, dans lequel le dispositif d'accouplement (38) peut être fixé hydrauliquement dans la position neutre (N) .

3. Système de transmission selon la revendication 1 ou 2, comprenant un cylindre hydraulique (54) pour l'actionnement hydraulique du dispositif d'accouplement (38), dans lequel est disposé un piston par le biais duquel deux espaces de cylindre agissant à l'opposé l'un à l'autre (58, 60) sont en partie limités.

4. Système de transmission selon la revendication 3, dans lequel au moins l'un des espaces de cylindre (58, 60) peut être connecté fluidiquement par le biais d'une soupape de régulation (66, 68) du système de transmission (3) à une source de fluide sous pression (52) et à un carter de fluide sous pression (T).

5. Système de transmission selon la revendication 4, dans lequel, dans un chemin d'écoulement de fluide sous pression qui s'étend entre la soupape de régulation (66, 68) et l'espace de cylindre associé à celle-ci, est disposé une buse (74, 76) ou un étranglement.

6. Système de transmission selon l'une quelconque des revendications précédentes, dans lequel, au niveau de l'un des arbres (18), le dispositif d'accouplement (38) est connecté de manière solidaire en rotation à l'arbre (18) et est disposé de manière déplaçable axialement, et des pignons fous (44, 46) des deux étages de transmission (34, 36) sont disposés de manière rotative et définie axialement, et le dispositif d'accouplement (38), actionné hydrauliquement, peut être amené en liaison solidaire en rotation à chaque fois avec l'un des pignons fous (44, 46).

7. Entraînement de conduite comprenant un système de transmission (3) configuré selon l'une quelconque des revendications précédentes.

8. Procédé de commande d'un système de transmission (3) qui est réalisé selon l'une quelconque des revendications 1 à 6, pour passer d'un premier (34) des étages de transmission (34, 36) à un deuxième (36) des étages de transmission (34, 36), comprenant l'étape suivante :
- fixation du dispositif d'accouplement (38) dans la position neutre (N) entre les étages de transmission (34, 36),
**caractérisé par** l'étape suivante :
- assistance supplémentaire de la fixation au moyen d'un moyen d'encliquetage pour la fixation mécanique.

9. Procédé selon la revendication 8, dans lequel le système de transmission (3) pour l'actionnement hydraulique du dispositif d'accouplement (38) présente un cylindre hydraulique (54) accouplé à celui-ci, dans lequel est disposé un piston par le biais duquel deux espaces de cylindre agissant à l'opposé l'un à l'autre (58, 60) sont en partie limités, l'étape consistant à fixer le dispositif d'accouplement (38) présentant une étape de serrage hydraulique du piston au moyen d'une pression de retenue des espaces de cylindre (58, 60) et/ou une étape de fixation mécanique.

10. Procédé selon la revendication 9, dans lequel, avant l'étape de fixation du dispositif d'accouplement (38), il se produit une étape d'actionnement hydraulique du dispositif d'accouplement (38) dans la position neutre (N) au moyen d'une régulation de profils de pression des espaces de cylindre (58, 60) dépendant de la course et/ou du temps.

11. Procédé selon la revendication 10, dans lequel l'étape d'actionnement hydraulique du dispositif d'accouplement (38) dans la position neutre (N) au moyen d'une régulation de profils de pression des espaces de cylindre (58, 60) dépendant de la course et/ou du temps présente une première étape d'abaissement de la pression de l'espace de cylindre (58) agissant à l'encontre d'une direction d'actionnement, en particulier approximativement à une pression du carter de fluide sous pression (T).

12. Procédé selon la revendication 11, dans lequel l'étape d'actionnement hydraulique du dispositif d'accouplement (38) dans la position neutre (N) au moyen d'une régulation de profils de pression des espaces de cylindre (58, 60) dépendant de la course et/ou du temps présente une deuxième étape d'augmentation de la pression de l'espace de cylindre (60) agissant dans la direction d'actionnement, qui s'effectue en partie par chevauchement avec la première étape ou à la suite de la première étape.

13. Procédé selon la revendication 12, dans lequel la deuxième étape s'effectue en même temps que la première étape.

14. Procédé selon la revendication 13, dans lequel, après une libération du piston, des étapes d'augmentation de la pression de l'espace de cylindre (58) agissant à l'encontre de la direction d'actionnement et d'abaissement de la pression de l'espace de cylindre (60) agissant dans la direction d'actionnement, s'effectuent approximativement en même temps jusqu'à obtenir la pression de retenue respective.
